# EUROPÄISCHE PATENTSCHRIFT

(11) **EP 0 887 038 B1**
(45) Veröffentlichungstag und Bekanntmachung des Hinweises auf die Patenterteilung: **27.08.2003**
(21) Anmeldenummer: 98111526.4
(22) Anmeldetag: 23.06.1998
(51) Int. Cl.: A47J 41/00

(54) **Ausgiessbares Thermosgefäss**
Thermally insulated vessel with pouring device
Récipient isolant à verser

(30) Priorität: 23.06.1997 DE 19726662
(43) Veröffentlichungstag der Anmeldung: 30.12.1998
(73) Patentinhaber: Pawsky, Leonhard, 97892 Kreuzwertheim (DE)
(72) Erfinder: Pawsky, Leonhard, 97892 Kreuzwertheim (DE)
(74) Vertreter: Pöhner, Wilfried Anton, Dr.

(56) Entgegenhaltungen:
- DE-U- 29 504 343
- DE-U- 29 512 021

## Beschreibung

Die Erfindung bezieht sich auf ausgießbare Thermosgefäße, bestehend aus einem Gehäuse, einem Ventilstößel und einem von der Oberseite her auf das Gehäuse aufschraubbaren Verschluß, wobei das Gehäuse einen oben offenen Dewar enthält, dessen Öffnung, gegebenenfalls durch Zwischenschalten eines Dichtringes, über den Ventilstößel abdichtbar ist, wobei der in Richtung auf die Öffnung des Dewars zu bewegliche Ventilstößel im geschlossenen Zustand dichtend anliegt und über einen entgegen einer Federkraft beweglichen Hebel den Dewar öffenbar macht. Solches Thermogefäß ist aus DE-U- 29504343 bekannt.

Thermosgefäße sind mit von der Oberseite her aufschraubbaren Verschlüssen bekannt, die zum Zwecke des Einfüllens oder Ausgießens von Flüssigkeit vorübergehend entfernt werden. Bei moderneren Thermosgefäßen ist der Verschluß mit einem Hebel ausgestattet, über dessen Betätigung ein Ventil zum Ausgießen öffnet, sodaß der Verschluß hierzu nicht abgedreht werden muß. Dabei wird durch das Herunterdrücken des Hebels ein Ventilstößel vom oberen Rand eines oben offenen Dewars weg bewegt, sodaß ein Spalt zwischen einem gegenbenenfalls auf dem Dewarrand aufliegenden Dichtring und dem Stößel entsteht, durch den bei Flüssigkeit ausgießbar wird. Diese Bewegung des Ventilstößels senkrecht zu der durch den Dewarrand beschriebenen Ebene öffnet entgegen der Wirkung einer Federkraft, sodaß sich nach dem Loslassen des Hebels der Ventilstößel wieder auf die Dewaröffnung zubewegt und schließlich seine Endlage zunimmt, in der er so fest auf den gegebenenfalls vorhandenen Dichtring aufgepresst wird, daß das Dewargefäß geschlossen bleibt. Die Federwirkung wird dabei von einer zwischen dem Ventilstößel und dem mit dem Thermosgefäßgehäuse verschraubten Verschluß lose eingelegten, jedoch vorgespannten Schraubenfeder erzeugt.

Als nachteilig ist anzusehen, daß die in ihrer Ruhelage gespannte Schraubenfeder dem Anwender beim Zerlegen des Verschlußes in dessen Bestandteile, z. B. bei der Entfernung von Getränke- und Spülmittelresten, entgegenspringt. Ferner ist der Wiederzusammenbau mühsam, weil dazu die Feder gespannt werden muß. Die Spannung soll dabei stark genug sein, um den Ventilstößel so auf den Dewarrand zu pressen, daß aus dem Dewar in gekippter Lage keine Flüssigkeit austreten kann.

Ausgehend vom Stande der Technik liegt der Erfindung das Problem zugrunde, den die Federwirkung hervorrufenden Mechanismus derart zu gestalten, daß der Verschluß bequem und für den Anwender gefahrlos in seine Bestandteile zerlegt und wieder zu einer Einheit zusammengesetzt werden kann.

Erfindungsgemäß wird das Problem dadurch gelöst, daß die Federkraft durch über den Umfang äquidistant angeordnete Federzungen erzeugt wird, die im wesentlichen in einer Ebene senkrecht zur Bewegungsrichtung des Stößels liegen und zwischen dem Stößel und dem Verschluß eingespannt sind.

Der Kerngedanke der Erfindung besteht darin, daß die zur Anpressung des Ventilstößels auf die Dewaröffnung erforderliche Druckwirkung zu gleichen Teilen von mehreren Federzungen erzeugt wird.
Die Funktionsweise des erfundenen Federelementes ist wie folgt:
Zum Abdichten des Thermosgefäßes sind alle Federzungen des Federelementes gleichmäßig vorgespannt. Die von den Federzungen aufgrund ihrer Spannung erzeugte rückwirkende Kraft drückt den Ventilstößel vom Verschluß weg. Die Federzungen sind in radial äquidistanten Abständen überwiegend in einer Ebene angeordnet, die senkrecht zur Bewegungsrichtung des Ventilstößels und parallel zur Öffnungsebene des Dewars liegt. Daher üben die vorgespannten Federzungen eine gleichmäßig über den Umfang des Stößels verteilte Kraft auf den Stößel aus. Diese Kraft presst den Ventilstößel senkrecht auf den Dewarrand, wodurch das Thermosgefäß in jeder Lage geschlossen gehalten wird.
Zum Ausgießen des Inhalts wird das Thermosgefäß unter Betätigung des zum Verschluß gehörenden Hebels geneigt, sodaß sich der Ventilstößel von der Dewaröffnung weg in Richtung auf den Verschluß bewegt. Durch die Annäherung des Ventilstößels an den Verschluß werden alle Federzungen gleichmäßig stärker angespannt. Die Arbeit, welche dabei an den Federzungen geleistet wird, ist vom Benutzer des Thermosgefäßes beim Drücken des Hebels aufzubringen. Läßt der Benutzer den Hebel wieder los, so übertragen die Federzungen ihre vorher gewonnene potentielle Energie auf den Ventilstößel. Dies führt zu einer Translation des Ventilstößels zurück in seine Ausgangsposition, in welcher er das Dewargefäß durch die Wirkung der vorgespannten Federzungen schließt.

Der Vorteil der Erfindung besteht vornehmlich darin, daß der Verschluß mühelos in seine Komponenten zerlegt, gereinigt und anschließend wieder zusammengebaut werden kann.

Eine Möglichkeit den Erfindungsgegenstand anzufertigen besteht darin, die Federzungen und ein Bestandteil des Verschlußes aus einem Teil zu gießen. Die freien Enden der in radial äquidistanten Abständen am Verschluß befestigten Federzungen drücken im zusammengesetzten Thermosgefäß von der Oberseite her auf den Ventilstößel. Alternativ können die Federzungen mit dem Ventilstößel einteilig gegossen werden. Die freien Enden der gespannten Federzungen berühren den Verschluß im zusammengesetzten Thermosgefäß von der Unterseite her.

Damit bei unbetätigtem Hebel der Ventilstößel das Thermosgefäß abdichtet, müssen die Federzungen genügend vorgespannt sein. Wird der Hebel betätigt, so soll mit der Bewegung des Ventilstößels vom oberen Dewarrand weg die Spannung der Federzungen in dem Sinne ausreichend zunehmen, daß nach dem Loslassen des Hebels eine sofortige, zügige Bewegung des Ventilstößels zurück in Richtung der Dewaröffnung erfolgt. Diesen beiden Anforderungen genügen in radialer Richtung einfach oder mehrfach gebogene und/oder geknickte Federzungen.

Die Herstellung einer Abdichtung zwischen dem Ventilstößel und dem Gehäuse durch einen am Ventilstößel einstückig angeformten Dichtring ist besonders vorteilhaft. Er ist demzufolge als fester Bestandteil des Ventilstößels angelegt. Seine Herstellung erfolgt in der Weise, daß der Dichtring durch Zweikomponenten-Spritzverfahren während des Spritzvorganges unlösbar angespritzt wird. Er besteht aus einem leicht verformbaren Elastomer. Der Vorteil dieses Ausführungsbeispieles ist darin zu sehen, daß kein zusätzliches Dichtelement erforderlich ist, das zusätzlich montiert werden muß und auch verloren gehen könnte. Zudem ist auf diese Weise eine relativ präzise Positionierung des Dichtringes möglich. Die Abdichtung erfolgt im Bereich zwischen dem Ventilstößel und dem das Widerlager bildende Gehäuse.

Der Verschluß läßt sich zu Reinigungszwecken in folgende Bestandteile zerlegen: Abdeckplatte, Hebel und Gewindestück. Um das Zerlegen und den Wiederzusammenbau zu erleichtern, ist die Abdeckplatte auf das Gewindestück aufgeklipst.

Damit beim Herunterdrücken des Hebels eine Bewegung des Ventilstößels in Richtung des Verschlußes erfolgt, ist der Hebel mit einer Querachse ausgestattet, über die er in einer geeigneten Vertiefung des Gewindeelementes aufliegt und um die er drehbar ist. Darüberhinaus ist das sich unter dem Verschlußdeckel befindliche Ende des Hebels durch eine quer durch die Symmetrieachse des Stößels verlaufende Öffnung durchgeschoben.

Zur Zerlegung des Verschlußes, muß er aus dem Gehäuse herausgedreht werden. Die Abdeckplatte ist vom Gewindeelement leicht lösbar. Der Hebel kann aus dem Stößel herausgezogen werden, wenn der Stößel gegen das Gewindeelement gedrückt wird. Anschließend ist die Spannung, der die zwischen dem Gewindeteil und dem Stößel eingespannten Federzungen unterliegen, langsam abzubauen. Sind die Federzungen entspannt, so kann das Gewindeelement vom Stößel abgehoben werden.

Zur Anzeige des Verschlußzustandes des Thermosgefäßes wird im Verschluß ein von außen einsehbarer Stempel verschieblich geführt, der mit dem Hebel in Verbindung steht. Die Position des Hebels gibt den konkreten Öffnungszustand (verschlossener/geöffneter und ausgießfähig) wieder. Für den Benutzer wird somit eine optische Erkennbarkeit des Öffnungszustandes des Thermosgefäßes geschaffen. Im Regelfall wird sich der Stempel in vertikaler, d.h. zur Achse des Thermosgefäßes im wesentlichen parallel verlaufender Achse bewegen, sodaß durch einen Blick von oben auf den Verschluß der Schließzustand einwandfrei ermittelt werden kann. Es wird somit sichergestellt, daß das Gefäß aus Unaufmerksamkeit in geöffnetem Zustand - und damit thermisch wenig isoliert - nicht abgestellt werden kann.

Auf dem Markt sind Thermoskannen erhältlich, deren Verschluß mit einem Durchbrühventil ausgestattet ist. Solche Ventile öffnen sich beim Einschieben der Kanne in eine geeignete Maschine, welche über ein Hindernis in Höhe des oberen Verschlußbereiches verfügt. Dabei gleitet der abgeschrägte obere Verschlußbereich an der Kante des Hindernisses entlang und wird dadurch entgegen einer Federwirkung heruntergedrückt. Wenn die Kanne wieder aus der Maschine herausgezogen wird, entspannt sich die Feder wieder und drückt den oberen Verschlußbereich nach oben. In der unteren Stellung des oberen Verschlußbereiches ist das Durchbrühventil geöffnet, in der oberen ist es geschlossen. Der Vorteil eines solchen Ventils liegt darin, daß der Verschluß zum Einfüllen von Flüssigkeiten nicht kurzzeitig entfernt werden muß. Die Flüssigkeit ist daher während des Umfüllvorgangs von der Maschine in die Kanne thermisch isoliert. Auch für Verschlüsse dieser Art stellt die Erfindung ein geeignetes Federzungenelement zur Verfügung.

Anhand der folgenden Abbildungen sollen verschiedene Ausführungsformen von Verschlüssen mit einem Federzungenelement und mehrere Bauformen für Federzungen vorgestellt werden.

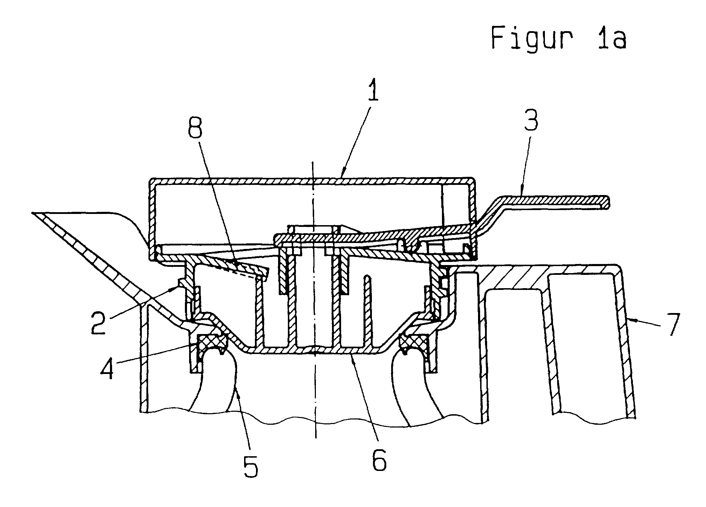

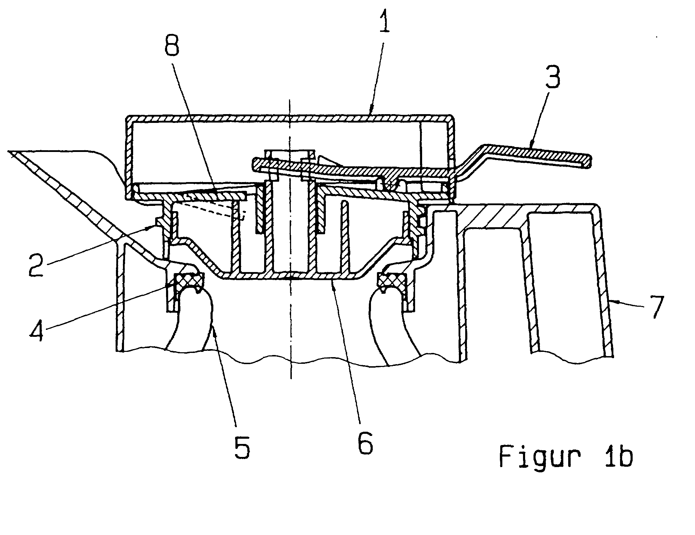

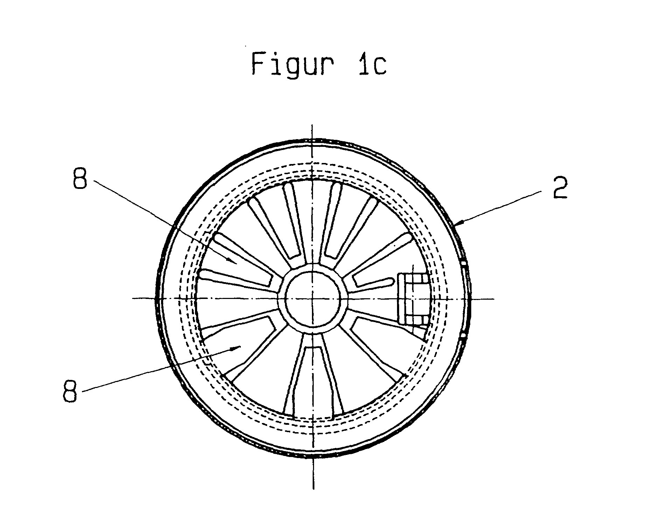

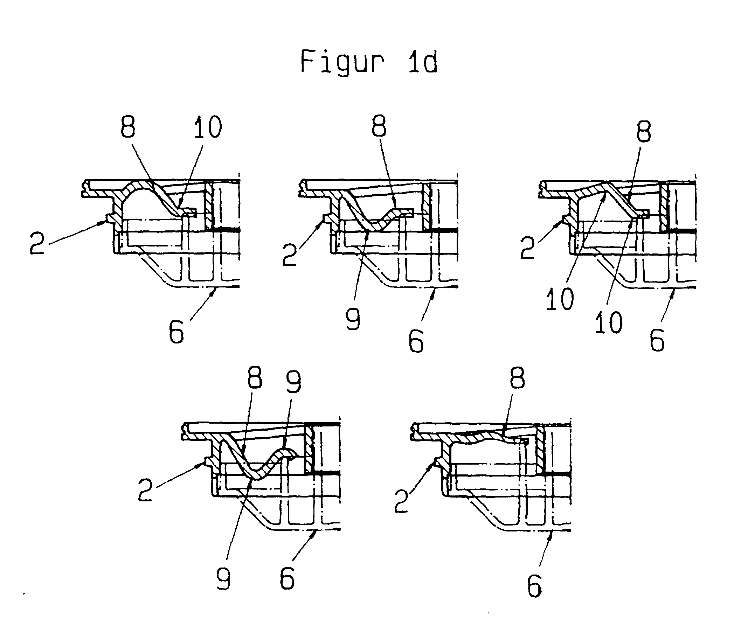

Abbildung 1 zeigt, im längsseitigen Querschnitt, den Verschlußbereich eines Thermosgefäßes, bei dem die Federzungen (8) und das Gewindeteil (2) des Verschlußes einstückig sind. Die freien Enden der Federzungen (8) sind hier nach innen orientiert.

In Abbildung 1a ist das Thermosgefäß geschlossen. Der Ventilstößel (6) wird durch die leicht gespannten Federzungen (8), deren freie Enden von der Oberseite her auf ihm aufliegen, auf den Dichtgummi (4) gedrückt, welcher auf dem oberen Rand des Glasdewars (5) befestigt ist.
Abbildung 1b veranschaulicht den bei Hebelbetätigung geöffneten Zustand des Thermosgefäßes. Durch das Herunterdrücken des Hebels (3) wird der Ventilstößel (6), entgegen der durch die Federzungen erzeugten Kraft, vom Dichtgummi 4) angehoben. Abbildung 1c zeigt das in den Abbildungen 1a und 1b verwendete Gewinde- und Federstück in Draufsicht. Es ist hier wahlweise mit 6 oder 8 Federzungen (8) ausgestattet. In Abbildung 1d sind im Querschnitt Beispiele für mögliche radiale Formen von Federzungen (8) dargestellt. Die Federzungen enthalten in radialer Richtung verlaufende Knickpunkte (10) und/oder Bogenelemente (9).

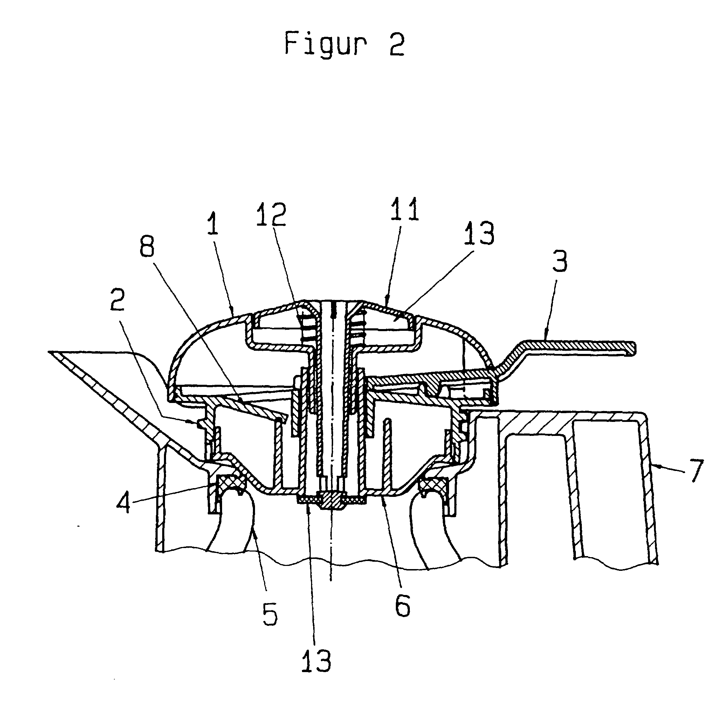

Abbildung 2 zeigt im wesentlichen den Querschnitt eines Verschlußes mit Durchbrühventil (11), wie er aussieht, wenn das Federzungenelement, analog zu Abbildung 1, mit dem Gewindeelement (2) des Verschlußes einstückig ist. In der Darstellung sind beide Ventile (6,11) geschlossen. Das Durchbrühventil (11) öffnet sich beim Absenken des oberen Verschlußbereiches (13) entgegen der Wirkung einer Schraubenfeder (12). Es wird zum automatischen, thermisch isolierten Umfüllen von Getränken aus einer Maschine in die, aufrecht in sie hineingeschobene, Thermoskanne verwendet. Dagegen öffnet sich das zweite Ventil unter Hebelbetätigung und ist zum Ausgießen von Getränken bei geneigter Thermoskanne vorgesehen.

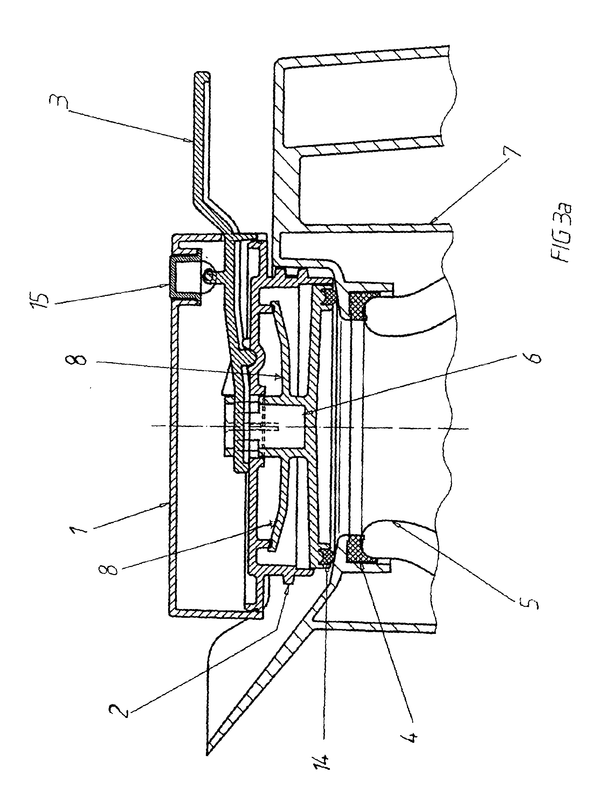

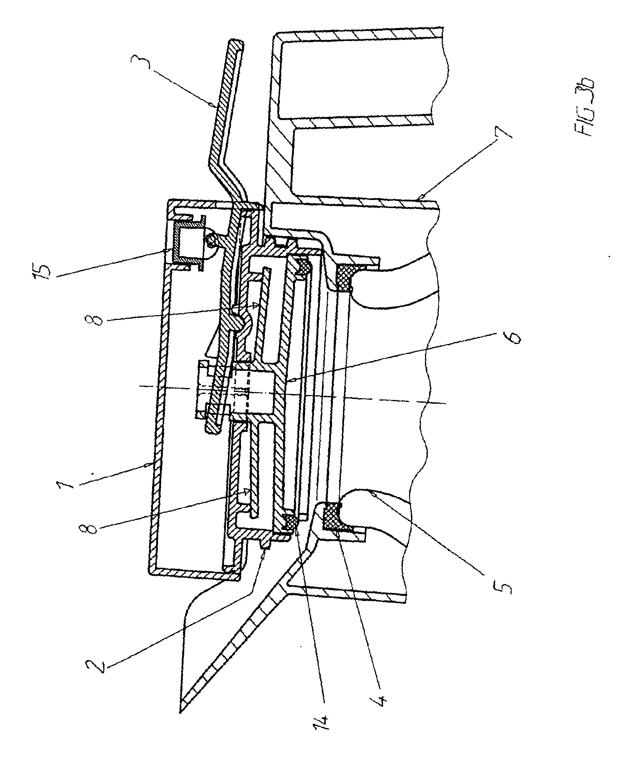

Abbildung 3 zeigt, analog zu Abbildung 1, den Verschlußbereich einer Thermoskanne im Querschnitt. Im Gegensatz zu Abbildung 1 ist hier das Federzungenelement nicht mit dem Gewindeelement (2) des Verschlußes, sondern mit dem Ventilstößel (6) einstückig. Die freien Enden der radial gerichteten und nach außen orientierten Federzungen (8) berühren von der Unterseite her das in das Thermoskannengehäuse (7) hineingedrehte Gewindeelement (2) des Verschlußes. Zudem erkennt man auch den unmittelbar am Gehäuse anliegenden und einstückig am Ventilstößel (6) angeformten Dichtring (14). Mit dem Hebel (3) steht der vertikal bewegliche Stempel (15) in Verbindung, der von oben her die Position des Hebels (3) und somit den Öffnungszustand zu erkennen erlaubt.
Abbildung 3a zeigt die Thermoskanne im geschlossenen Zustand. Die vorgespannten Federzungen (8) drücken den Ventilstößel (6) vom Gewindestück (2) weg und pressen ihn auf den Dichtring (14). Abbildung 3b zeigt die Thermoskanne im geöffneten Zustand. Durch Betätigen des Hebels (3) wird der Ventilstößel (6) von dem Dichtring (14) weg in Richtung des Gewindestückes (2) angehoben. Dies erhöht die Spannung in den Federzungen (8), weil deren freie Enden von der Unterseite her mit dem Gewindeelement (2) des Verschlußes in Kontakt stehen. Wird der Hebel (3) losgelassen, so löst sich die Federspannung wieder, wodurch der Ventilstößel (6) zurück auf den Dichtring (14) gedrückt wird. In der geöffneten Position des Hebels (3) wird der Stempel (15) nach unten bewegt und hierdurch optisch signalisiert, daß der geöffnete, d.h. ausgießfähige Zustand vorliegt.

## Patentansprüche

1. Ausgießbares Thermosgefäß, bestehend aus einem Gehäuse (7), einem Ventilstößel (6) und einem von der Oberseite her auf das Gehäuse aufschraubbaren Verschluß (1), wobei das Gehäuse (7) einen oben offenen Dewar (5) enthält, dessen Öffnung, gegebenenfalls durch Zwischenschalten eines Dichtringes (4), über den Ventilstößel (6) abdichtbar ist, wobei der in Richtung auf die Öffnung des Dewars (5) zu bewegliche Ventilstößel (6) im geschlossenen Zustand dichtend anliegt und über einen entgegen einer Federkraft beweglichen Hebel (3) den Dewar öffenbar macht, **dadurch gekennzeichnet, daß** die Federkraft durch über den Umfang äquidistant angeordnete Federzungen (8) erzeugt wird, die im wesentlichen in einer Ebene senkrecht zur Bewegungsrichtung des Stößels (6) liegen und zwischen dem Stößel (6) und dem Verschluß (1) eingespannt sind.

2. Ausgießbares Thermosgefäß nach Anspruch 1, **dadurch gekennzeichnet, daß** die Federzungen mit einem Bestandteil des Verschlußes einstückig sind.

3. Ausgießbares Thermosgefäß nach Anspruch 1, **dadurch gekennzeichnet, daß** die Federzungen und der Stößel einstückig sind.

4. Ausgießbares Thermosgefäß nach einem der Ansprüche 1 bis 3, **dadurch gekennzeichnet, daß** die Federzungen in radialer Richtung einfach oder mehrfach gebogen sind.

5. Ausgießbares Thermosgefäß nach einem der Ansprüche 1 bis 4, **dadurch gekennzeichnet, daß** die Federzungen in radialer Richtung einfach oder mehrfach geknickt sind.

6. Ausgießbares Thermosgefäß nach einem der Ansprüche 1 bis 5, **dadurch gekennzeichnet, daß** an den Ventilstößel (6) der Dichtring einstückig angeformt ist.

7. Ausgießbares Thermosgefäß nach einem der Ansprüche 1 bis 6, **dadurch gekennzeichnet, daß** der Verschluß aus einer Abdeckplatte, einen Hebel und ein Gewindeteil lösbar zusammengesetzt ist.

8. Ausgießbares Thermosgefäß nach Anspruch 7, **dadurch gekennzeichnet, daß** die Abdeckplatte auf das Gewindeteil aufgeklipst ist.

9. Ausgießbares Thermosgefäß nach Anspruch 7 oder Anspruch 8, **dadurch gekennzeichnet, daß** der Hebel, vorzugsweise etwa auf halber Länge, eine Querachse aufweist, um die er schwenkbar ist.

10. Ausgießbares Thermosgefäß nach Anspruch 9, **dadurch gekennzeichnet, daß** das Gewindeteil eine geeignete Vertiefung zur Aufnahme der Querachse des Hebels aufweist.

11. Ausgießbares Thermosgefäß nach einem der Ansprüche 1 bis 11, **dadurch gekennzeichnet, daß** der Stößel senkrecht zu seiner koaxial verlaufende Achse eine Öffnung aufweist, in die das sich unterhalb der Abdeckplatte befindliche Ende des Hebels eingreift.

12. Ausgießbares Thermosgefäß nach einem der Ansprüche 1 bis 11, **dadurch gekennzeichnet, daß** der Hebel (3) mit einem axial im Verschluß geführten Stempel zur Anzeige des Öffnungszustandes in Verbindung steht.

13. Ausgießbares Thermosgefäß nach einem der Ansprüche 1 bis 12, **dadurch gekennzeichnet, daß** er ein Durchbrühventil aufweist, welches sich durch Einschieben in eine Kaffeemaschine durch Absenkung des Gehäusefernen Verschlußbereiches entgegen einer Federwirkung öffenbar ist.

## Claims

1. Thermally insulated vessel suitable for pouring, consisting of a housing (7), a valve plunger (6) and a closure (1), which can be screwed onto the housing from the top, the housing (7) containing a Dewar (5), which is open at the top and whose opening can also be sealed, if necessary with the interposition of a sealing ring (4), by means of the valve plunger (6), the valve plunger (6), which is movable towards the opening of the Dewar (5), bearing against it so as to form a seal and allowing the Dewar to be opened by means of a lever (3) which is movable against a spring force **characterised in that** the spring force is generated by spring tongues (8), which are arranged equidistantly around the circumference and lie essentially in a plane perpendicular to the direction of movement of the plunger (6) and are tensioned between the plunger (6) and the closure (19.

2. Thermos vessel suitable for pouring, according to claim 1, **characterised in that** the spring tongues are in one piece with a portion of the closure.

3. Thermos vessel suitable for pouring, according to claim 1, **characterised in that** the spring tongues and the plunger are in one piece.

4. Thermos vessel suitable for pouring, according to one of claims 1 to 3, **characterised in that** the spring tongues are singly or multiply curved in the radial direction

5. Thermos vessel suitable for pouring, according to one of claims 1 to 4, **characterised in that** the spring tongues are singly or multiply bent in the radial direction

6. Thermos vessel suitable for pouring, according to one of claims 1 to 5, **characterised in that** the sealing ring is formed in one piece with the valve plunger (6).

7. Thermos vessel suitable for pouring according to one of claims 1 to 6, **characterised in that** the closure is detachably assembled from a cover plate, a lever and a threaded portion.

8. Thermos vessel suitable for pouring, according to claims 7, **characterised in that** the cover plate is clipped onto the threaded portion.

9. Thermos vessel suitable for pouring, according to claim 7 or claim 8, **characterised in that** the lever preferably has a cross-axis at about half its length, about which it is pivotable.

10. Thermos vessel suitable for pouring, according to claim 9, **characterised in that** the threaded portion has a suitable depression for receiving the cross-axis of the lever.

11. Thermos vessel suitable for pouring, according to one of claims 1 to 10, **characterised in that** the plunger has, perpendicular to its coaxially extending axis, an opening in which that end of the lever that is below the cover plate engages.

12. Thermos vessel suitable for pouring, according to one of claims 1 to 10, **characterised in that** the lever (3) is provided with a marker, which is guided axially in the closure, for indicating the opening state.

13. Thermos vessel suitable for pouring, according to one of claims 1 to 10, **characterised in that** it has a brewing valve which can be opened by pushing into a coffee machine by lowering that closure region that is remote from the housing against a spring action.

## Revendications

1. Cafetière verseuse isotherme composée d'une coque (7), d'un poussoir (6) et d'un bouchon (1) que l'on peut visser dans la coque par en haut, la coque (7) renfermant un vase de Dewar (5) ouvert en haut, dont l'ouverture peut être obturée, le cas échéant, par le poussoir (6) en intercalant un joint (4), ce poussoir (6) se déplaçant en direction de l'ouverture du vase de Dewar (5) pour assurer une fermeture hermétique de la cafetière isotherme et son ouverture par l'intermédiaire d'un levier (3) faisant ressort **caractérisée en ce que**
l'on crée la force élastique au moyen de languettes flexibles (8) équidistantes réparties sur tout le pourtour, ces languettes (8) étant essentiellement situées dans un plan perpendiculaire au sens du déplacement du poussoir (6) et étant encastrées entre le poussoir (6) et le bouchon (1).

2. Cafetière verseuse isotherme selon la revendication 1, **caractérisée en ce que** les languettes flexibles et l'un des composants du bouchon sont moulés en une seule pièce.

3. Cafetière verseuse isotherme selon la revendication 1, **caractérisée en ce que** les languettes flexibles et le poussoir forment une seule pièce.

4. Cafetière verseuse isotherme selon l'une des revendications 1 à 3, **caractérisée en ce que** les languettes flexibles présentent une ou plusieurs parties courbées dans le sens radial.

5. Cafetière verseuse isotherme selon l'une des revendications 1 à 4, **caractérisée en ce que** les languettes flexibles présentent un ou plusieurs points d'inflexion dans le sens radial.

6. Cafetière verseuse isotherme selon l'une des revendications 1 à 5, **caractérisée en ce que** le joint est moulé d'une pièce sur le poussoir (6).

7. Cafetière verseuse isotherme selon l'une des revendications 1 à 6, **caractérisée en ce que** le bouchon se compose d'une plaque de dessus, d'un levier et d'une pièce filetée.

8. Cafetière verseuse isotherme selon la revendication 7, **caractérisée en ce que** la plaque de dessus est emboîtée sur la pièce filetée.

9. Cafetière verseuse isotherme selon la revendication 7 ou 8, **caractérisée en ce que** le levier est pourvu d'un axe transversal, situé de préférence à mi-longueur, autour duquel il tourne.

10. Cafetière verseuse isotherme selon la revendication 9, **caractérisée en ce que** la pièce filetée présente un évidemment dans lequel vient se loger l'axe transversal du levier.

11. Cafetière verseuse isotherme selon l'une des revendications 1 à 11, **caractérisée en ce que** le poussoir présente un orifice perpendiculaire à son axe coaxial, dans lequel rentre l'extrémité du levier se trouvant sous la plaque de dessus du couvercle.

12. Cafetière verseuse isotherme selon l'une des revendications 1 à 11, **caractérisée en ce que** le levier (3) est relié à un piston se déplaçant axialement dans le bouchon, qui indique si la cafetière isotherme est ouverte ou fermée.

13. Cafetière verseuse isotherme selon l'une des revendications 1 à 12, **caractérisée en ce que** la cafetière est équipée d'une vanne de passage direct qui s'ouvre lorsqu'on enfile la cafetière isotherme dans une cafetière électrique appropriée, c.-à-d. que la partie supérieure du bouchon, du côté opposé à la coque, descend.
